# EUROPEAN PATENT SPECIFICATION

(11) **EP 1 445 448 B1**
(45) Date of publication and mention of the grant of the patent: **24.02.2010**
(21) Application number: 03293126.3
(22) Date of filing: 12.12.2003
(51) Int. Cl.: F02B 67/10, F01M 11/02

(54) **Supercharger arrangements for engine assemblies**
Aufladegebläse-Anordnung für Brennkraftmaschine
Arrangement de turbocompresseurs pour moteurs à combustion

(30) Priority: 12.12.2002 EP 02293075
(43) Date of publication of application: 11.08.2004
(73) Proprietor: RENAULT S.A.S., 92100 Boulogne Billancourt (FR)
(72) Inventor: Dumas, Eric, 78800 Houilles (FR); Gonzales, Pierre, 91140 Vilebon sur Yvette (FR); Hottebart, Pascal, 95610 Eragny sur Oise (FR); Lheriau, Benjamin, 78150 Le Chesnay (FR)
(74) Representative: Religieux, Vincent

(56) References cited:
- EP-A- 0 952 329
- EP-A- 1 176 301
- DE-A- 10 122 406
- US-A- 4 583 367
- US-A- 4 716 735

## Description

The present invention relates to supercharger arrangements for engine assemblies and in particular to a supercharger arrangement for an engine equipped with a plurality of superchargers.

It is known to provide an engine with one or more superchargers, which may be embodied in the form of exhaust driven turbochargers. Superchargers usually require a lubrication system and many such lubrication systems are closed circuits often using engine oil as a lubricant. The lubrication system usually includes an oil feed conduit and an oil return conduit. The oil feed supplies oil under pressure from an oil pump of the engine to the or each supercharger concerned and the oil return comprises a conduit adapted to drain the oil away towards a collection area such as an oil sump of the engine. Life expectancy of a turbocharger relies considerably on a steady flow of clean oil supplied to its bearings under pressure from the engine's lubrication system and on the free exit of that oil for its return back to the engine sump.

In US 4,716,735, an exhaust gas driven turbocharger arrangement is proposed in which an engine mounting is integrated with a bearing housing of the turbocharger. Oil supply and return passages are defined through the mounting for use in lubrication of the turbocharger bearings. Such an arrangement requires a custom-made turbocharger in order to integrate its bearing housing with the engine mounting of a particular installation. Custom-made turbochargers may prove more expensive than using mass-produced items.

The arrangement proposed in US 4,716,735 is best suited to use in engine assemblies having only one turbocharger and may not prove suitable for use in an arrangement calling for a plurality of turbochargers. For example, in a multi-cylinder engine having its cylinders arranged in banks in a 'V' or 'W' configuration, it may be desirable to provide a plurality of turbochargers.

Taking the example of a 'V' configured engine and attempting to fit a plurality of turbochargers according to US 4,716,735 dedicated one to each bank, it will be found that a symmetrical set-up is not possible. In order to bolt a second example of the same component to the opposite side of the engine block, the whole turbocharger and integrated mounting assembly of that second example must be rotated 180°. One problem with such an arrangement is that the compressor and exhaust turbines of the opposing turbochargers will point towards opposite ends of the engine. This may lead to complex and less than ideal inlet and exhaust ducting. To reverse the orientation of the turbocharger would require an inverted casting for the bearing housing, resulting in a customised turbocharger on each side of the engine. Rather than reducing piece cost by doubling volume, such an arrangement might prove cost prohibitive as it would significantly increase the investment necessary in producing both right- and left-handed parts. In addition, it would necessitate precautions in parts delivery to the side of the production line, e.g. to ensure smooth delivery of the right parts to the assembly stations affected in equal volumes of each and to their appropriate sides of the line.

In US 4,583,367 an arrangement is proposed for integration of a turbocharger arrangement with an engine mounting. This proposal deals with a single turbocharger and is concerned with defoaming and degassification of the oil being returned to the engine sump. Neither reversibility of the turbo installation between sides of the engine nor twin-turbochargers are considered. Reversing between sides or doubling up on turbochargers would suffer similar problems to those discussed in that respect for US 4,716,735.

EP-1176301 proposes an engine crankcase that includes an integral turbocharger mounting. In similar fashion to US 4,583,367, this document deals only with a single turbocharger and reversibility of the turbocharger installation between sides of the engine or twin-turbochargers are not considered. Reversing between sides or doubling up on turbochargers would suffer similar problems to those discussed in that respect for US 4,716,735

EP-0952329 proposes a single and very complicated casting that acts as a one-piece integrated front-end for a large industrial engine. A turbocharger mounting means is included on the top of the integrated front for mounting a pair of turbochargers. The use of such a one piece front end is expensive and is cost prohibitive for mass production. Such an arrangement also lacks flexibility in moving the position of the turbochargers around between variations in an engine range. The turbochargers can only be mounted high up on the engine and this makes the arrangement unsuitable for adaptation for use in a passenger vehicle due to the height restrictions inherent in under-hood installations.

DE-10122406 proposes a single carrier casing having mounting means for two turbochargers integrated into it. The casting includes lubrication channels for the turbochargers and is reversible in its mounting position in cooperation with a manifold arrangement. In similar fashion to EP-0952329, integration of both turbocharger mountings into the same casting largely limits use of this arrangement to mounting the turbochargers on top of the engine. That limits design flexibility and may impose height problems in some under-hood installations, notable for passenger vehicles.

There is therefore a continuing need to seek improved arrangements for mounting multiple superchargers to engines, in particular for use in installations for passenger vehicles and the like.

It is an object of the present invention to provide improved supercharger arrangements for engine assemblies and in particular to provide an improved arrangement for an engine equipped with a plurality of superchargers.

Accordingly, the present invention provides a supercharger arrangement for an engine assembly, the arrangement including first and second superchargers that are mounted on said engine assembly via first and second supercharger mounting means respectively, said superchargers being separable from said mounting means and said mounting means defining therethrough a supercharger lubrication conduit for each said supercharger, characterised in that said supercharger mounting means comprises individual first and second supercharger mounting members and in that said lubrication conduits are routed through their respective said mounting members in such a manner that said first and second superchargers are mounted on said engine assembly pointing in substantially the same direction, preferably in substantially mirror image orientation thereabouts.

Among the advantages of the present invention is the provision of a low cost arrangement for using a plurality of substantially identical superchargers on the same engine while achieving the same orientation, preferably substantially mirror image orientation, of those units around the engine. This saves costs by raising the volumes of an expensive part of a supercharging arrangement, the supercharger itself, rather than necessitating several different and possibly custom units. Using individual mountings increases flexibility in under-hood installations and the arrangement is not limited to mounting the superchargers on top of the engine.

Said mounting members may be disposed on opposite sides of a crankcase of said engine assembly.

Said lubrication conduits may connect said superchargers to an engine lubrication circuit through the sides of said crankcase.

Said lubrication conduits may each comprise a lubricant feed passage and a lubricant return passage and the routing of at least part of said feed and return passages may be inverted between said mounting members.

Inversion of said feed and return passages may take operative effect at respective supercharger mounting faces of said first and second supercharger mounting members.

When said superchargers are mounted on said engine assembly, at least one of corresponding pairs of charge air entries, charge air exits, exhaust gas entries or exhaust gas exits of said superchargers may be disposed in substantially the same orientation as each other with respect to said engine assembly.

At least one said individual mounting member may comprise a component that is integrated with a crankcase of said engine assembly.

At least one said mounting member may comprise a casting or a moulding.

At least one said individual mounting member may comprise a component that is separable from both its associated said supercharger and from the rest of said engine assembly.

Mounting of said superchargers may be interchangeable between said first and second mounting members, said superchargers preferably being of substantially identical construction.

Said arrangement may comprise a supercharger arrangement for an engine of a passenger vehicle, sports utility vehicle (SUV) or light commercial vehicle. A light commercial vehicle may be regarded as a commercial vehicle up to 3500kg gross vehicle weight (GVW).

Said arrangement may comprise a multi-bank engine having a crankcase and defining a plurality of cylinders that are disposed in banks at an angle with respect to each other, said individual first and second mounting members being disposed on opposite sides of said crankcase and said first and second superchargers being associated with different said banks of said engine assembly.

The present invention also provides a method of mounting a plurality of superchargers on an engine assembly, the method including ;
a) providing on substantially opposing sides of said engine assembly individual first and second supercharger mounting members, each of which mounting members has defined therethrough a lubrication feed passage and a lubrication return passage whose routing is substantially inverted between said mounting members in the region of respective supercharger mounting faces thereof; and
b) connecting first and second superchargers, preferably of substantially identical construction, to said first and second mountings respectively pointing in substantially the same orientations about said engine, preferably in substantially mirror image orientations thereabouts.

The present invention will now be described by way of example only and with reference to the accompanying drawings, in which:
Figure 1 is a schematic diagram of an engine assembly incorporating an arrangement according to the present invention:
Figure 2 is a schematic representation of a section through an engine assembly incorporating an embodiment of the arrangement of Figure 1;
Figure 3 is a close-up view of a first portion of Figure 2;
Figure 4 is a close-up view of a second portion of Figure 2;
Figure 5 is a perspective front view of a component of a practical embodiment of the arrangement of Figures 1 to 4;
Figure 6 is a perspective rear view of the component of Figure 5;
Figure 7 is a perspective front view of a further component of a practical embodiment of the arrangement of Figures 1 to 4;
Figure 8 is a perspective rear view of the component of Figure 7;
Figure 9 is a plan view of the disposition of the components of Figures 5 to 8 in an installed position, shown with respect to a possible but non-limiting installation in which the front of the engine assembly is marked "F";
Figure 10 is an end view of the arrangement of Figure 9, viewed from one end (e.g. a front end "F") of the engine assembly;
Figure 11 is the plan view of Figure 9 having a supercharger mounted onto each of the components of Figures 5 to 8;
Figure 12 is the view of Figure 10 having a supercharger mounted onto each of the components of Figures 5 to 8,
Figure 13 is the view of Figure 12 seen from the opposite end (e.g. a rear end "R") of the engine assembly; and
Figure 14 is a bottom view of the arrangement of Figures 11 to 13.

Referring to the drawings, a preferred embodiment of a supercharger arrangement is disclosed for an engine assembly 10. The engine 10 includes a cylinder crankcase 12, preferably in the form of a multi-bank engine block in which a plurality of cylinders (e.g. four, six, eight, ten or twelve) are connected to the crankcase 12 and are disposed in banks at an angle with respect to each other (e.g. a "V"). For the sake of example, the engine 10 of this embodiment may be considered as a V-6 engine fitted in use into an engine bay defined in a front portion of a vehicle and the engine 10 being disposed transverse to a centreline of the vehicle. The vehicle may comprise, for example, a passenger car, sports utility vehicle or a light commercial vehicle.

For convenience and in keeping with an exemplary but non-limiting transverse installation of a V-engine, the opposing banks of the engine 10 will be referred to as its front bank 14 and its rear bank 16. The banks of cylinders 14, 16 of the engine 10 are associated with respective front and rear cylinder heads 18, 20. It will be appreciated, however, that the present invention is not limited to only transverse installations and may be suitable for embodiment in the form of longitudinal, middle or rear mounted installations or in installations other than vehicles (e.g. generators or marine use).

The engine 10 is provided with a plurality of superchargers in the form of exhaust-gas driven variable geometry turbochargers 22A, 22B, each of which is assembled in association with an actuator 24 and are associated one each with the front bank 14 and the rear bank 16. In a variable geometry turbocharger, a valve is provided in the turbocharger casing. The valve is controlled by the actuator 24 and is used to vary the attack angle of exhaust gases driving the exhaust turbine so as to control its speed. For example, at low engine speeds the exhaust gas can provide only a low driving force to the exhaust turbine. The valve is then moved towards a closed position so as to increase the gas speed and thereby keep exhaust turbine speed up, even for low gas flows. On the other hand, at high engine speeds the valve is moved towards an open position so as to keep down the driving force. Such turbochargers may, therefore, be controlled to operate within a tight speed range. The present invention is not limited to only variable geometry turbochargers 22A, 22B and these may be replaceable by other types or equivalents such as waste-gate actuated turbochargers.

The turbochargers 22A, 22B are preferably of substantially identical construction and each comprises an exhaust turbine portion 26 and a compressor turbine portion 28. The exhaust turbine portion 26 includes an exhaust gas entry 30, an exhaust gas turbine and an exhaust gas exit 32 and the compressor portion 28 includes a charge air entry 34, a charge air compressor and a charge air exit 36. The exhaust turbine and compressor turbine are drivingly joined by means of a turbine shaft 38 that is supported on a turbine bearing arrangement 40. The turbine bearing arrangement 40 is lubricated by a lubricant, e.g. in the form of engine oil that is supplied under pressure by an engine oil pump and then drained back to a lubricant reservoir such as an engine sump.

The turbochargers 22A, 22B are mounted interchangeably to the engine 10 one on each side of the crankcase 12 by means of a pair of individual mounting members protruding outwardly from substantially opposing sides of the crankcase 12, referred to for convenience as the turbocharger front mounting 46 and rear mounting 48. The turbochargers 22A, 22B point in substantially the same direction with respect to the engine 10, e.g. at least one important feature such as the turbine/compressor shafts of the turbochargers 22A, 22B are disposed at substantially the same angle as each other with respect to a centreline running lengthways through that engine 10. The orientation of the turbochargers may therefore be considered herein to be substantially in mirror image, as will be discussed in greater detail below.

One or more of the individual front and rear turbocharger mountings 46, 48 may be integrated with the crankcase 12, whilst still being separate from each other and from the turbochargers. For ease of manufacture of the mountings 46, 48, however, it may be found preferable to produce them as separate components, separated from the crankcase 12 as well as from the turbochargers 22A, 22B and mountable to the crankcase 12. Such an individual and separate construction is the form illustrated by way of example in the present embodiment.

Each turbocharger 22A, 22B communicates with exhaust ports of at least its directly associated cylinder head 18, 20 via a connection 42 between its exhaust gas entry 30 and an exhaust arrangement 44 that includes one or more of header pipes and an exhaust manifold.

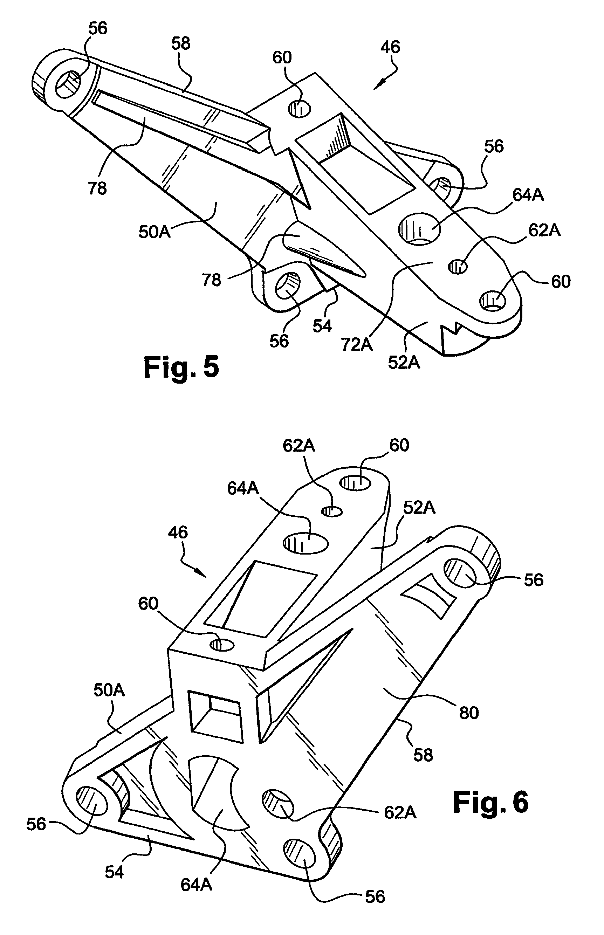

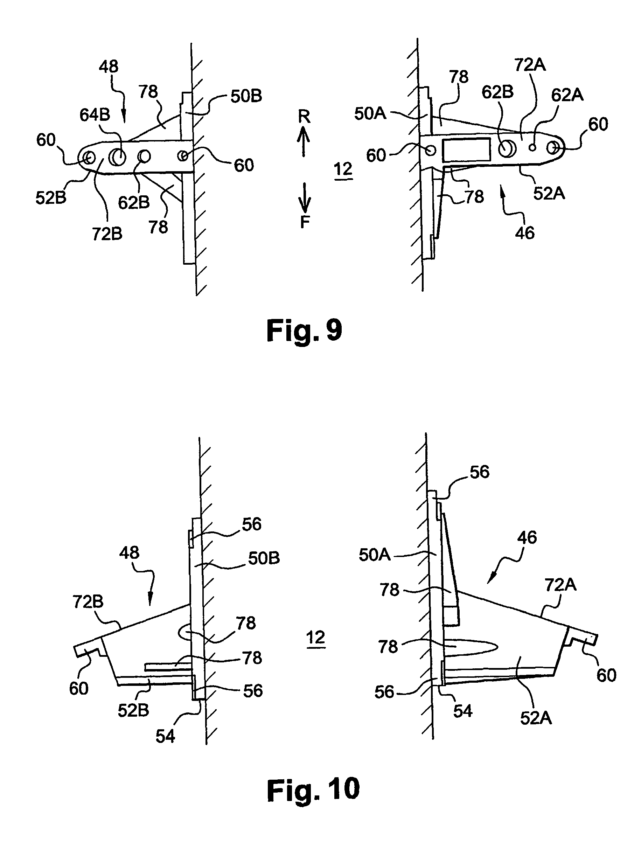

In the present embodiment, the individual turbocharger mountings 46, 48 each comprise a separate one-piece casting or moulding having a back plate 50A, 50B and a support arm 52A, 52B extending away from the back plate. As illustrated with particular reference for the moment to Figures 5 to 10, one or both of the back plates 50A, 50B may be essentially triangular and planar in form and may be canted to one side, i.e. towards one end of the crankcase 12. In the arrangement of the present embodiment, the back plates 50A, 50B each have a base portion 54 with a mounting hole 56 defined therethrough at each end and a raised peak 58 defining an upper mounting hole 56. For substantial symmetry or mirror image, in use the raised peaks 58 are canted towards the same end of the engine assembly 10 while the support arms 52A, 52B each extend outwardly from a position substantially centralised with respect to the base mounting holes 56.

The mountings 46, 48 each have an integral lubrication conduit in the form of a lubricant feed passage 62A, 62B and a lubricant return passage 64A, 64B. The lubricant feed 62A, 62B and return 64A, 64B passages may be in the form of ducting defined through the support arms 52A, 52B and the back plates 50A, 50B, e.g. formed in the casting/moulding process. These lubricant passages 62A, 62B, 64A, 64B are adapted to connect respective front and rear lubricant supply 68A, 68B and return 70A, 70B ports of the crankcase 12 to turbochargers 22A, 22B mounted in use on turbocharger mounting faces 72A, 72B, e.g. via mechanical fixings such as bolts screwed through a turbocharger-mounting flange and into mounting holes 60 defined in predetermined positions on the mounting faces. The positioning of the mounting holes 60 positions the turbochargers 22A, 22B in a predetermined orientation about the engine 10, e.g. along, towards or away from the cylinder crankcase 12.

It will be noted that the lubricant return passages 64A, 64B and crankcase return ports 70A, 70B are of a larger cross-sectional area that the lubricant feed ports 68A, 68B and lubricant feed passages 62A, 62B. This is because in the present embodiment the lubricant is supplied in the form of engine oil under pressure from an engine oil pump and under such circumstances the lubricant return passages 64A, 64B and crankcase return ports 70A, 70B are preferably be wider to accommodate gas bubbles in the spent oil returning to the engine sump.

In use, the lubricant feed and return passages 62A, 62B, 64A, 64B interface with lubricant inlets 74 and lubricant outlets 76 of the turbochargers 22A, 22B at the mounting faces 72A, 72B of the support arms 52A, 52B. The lubricant feed and return passages 62A, 62B, 64A, 64B are routed through their respective turbocharger mountings 46, 48 in such a manner as to enable the turbochargers 22A, 22B to be mounted on the engine 10 via the super-charger mounting holes 60 in substantially mirror image orientations thereabouts.

In such a mirror image disposition, the turbochargers 22A, 22B can be mounted with at least one of their corresponding pairs of charge air entries 34, charge air exits 36, exhaust gas entries 30 or exhaust gas exits 32 being disposed at substantially the same orientation with respect to the engine 10, i.e. so that the turbochargers 22A, 22B point in roughly the same direction. For example, the charge air entries 34 and exhaust gas exits 32 of the turbochargers 22A, 22B of each cylinder bank 14, 16 may be aligned substantially parallel with a centreline C/L running longitudinally through the cylinder crankcase 12. Such a situation is illustrated in the present embodiment and may be found useful in design of an associated air intake system or exhaust piping. Similar considerations may be applied to the charge-air exits 36 and/or the exhaust gas entries 30.

The lubricant supply ports 68A, 68B and return ports 70A, 70B may be positioned symmetrically on opposing sides of the cylinder crankcase 12. This means that if identical supercharger mountings were to be used on either side of the cylinder crankcase 12, the turbochargers 22A, 22B would point in opposite directions between opposing side of the engine 10. In order to compensate for this and to allow the use of substantially identical turbochargers 22A, 22B oriented in mirror image, e.g. pointing in substantially the same direction, the lubricant feed passages 62A, 62B and lubricant return passages 64A, 64B are operatively inverted between the mountings 46, 48.

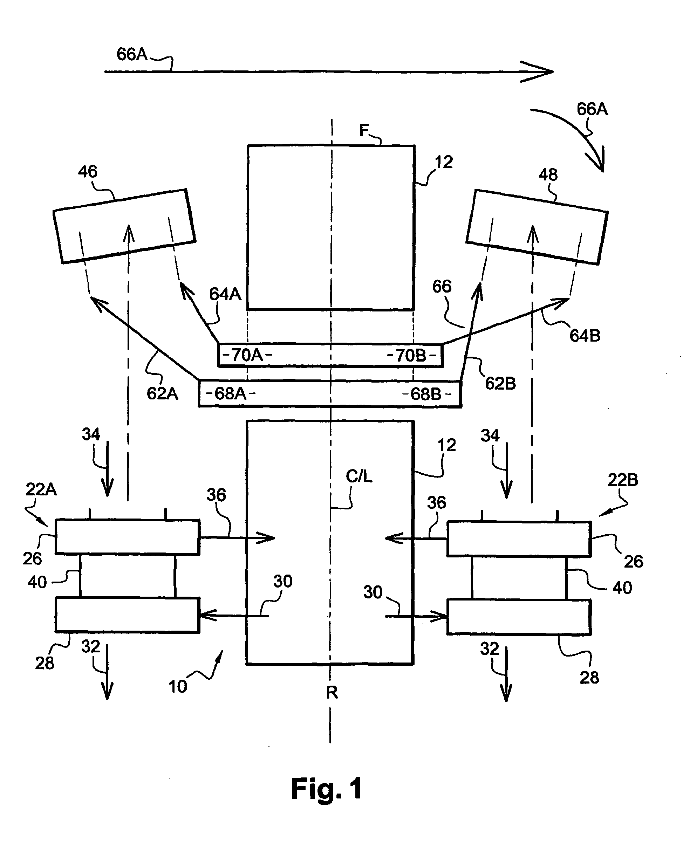

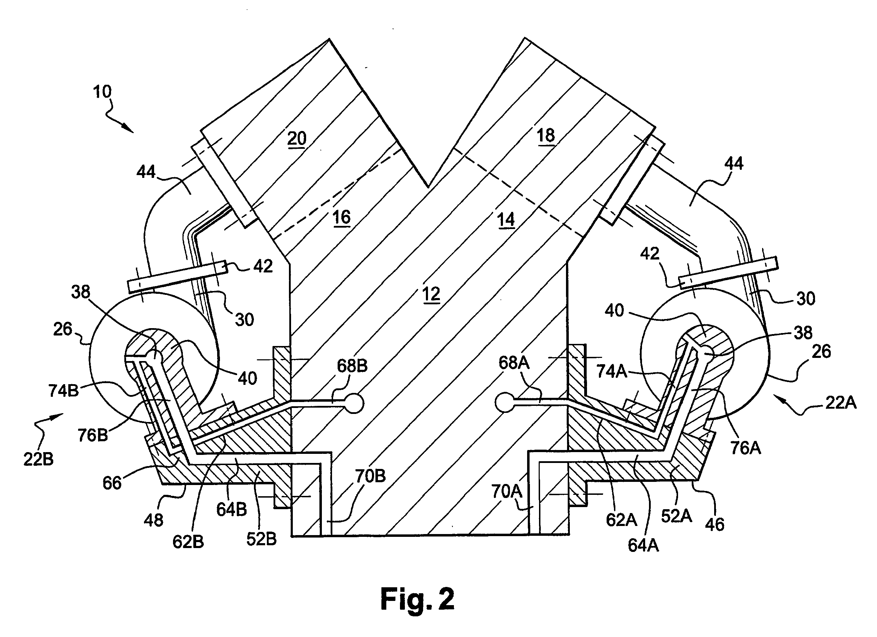

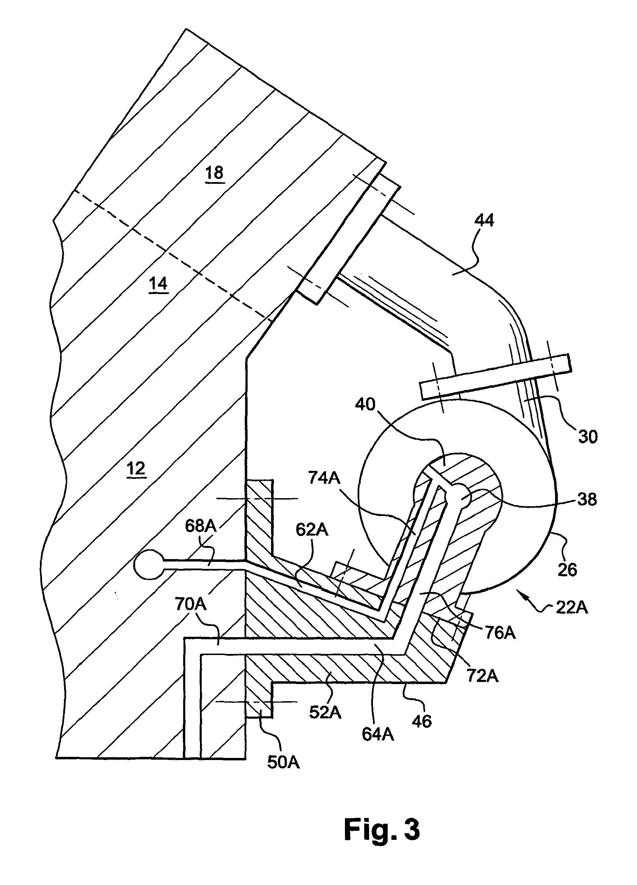

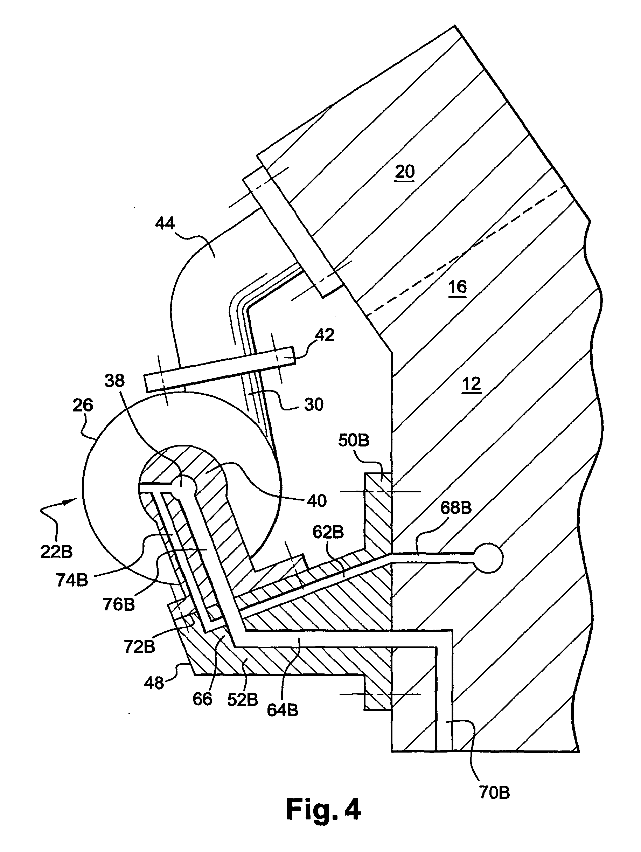

The inversion preferably takes place in a cross-over region 66 of one mounting, shown by way of example as inside the rear bank mounting 48 and visible schematically with particular reference to Figures 1 to 4. Crankcase symmetry may be maintained between its lubricant supply and return ports 68A, 68B, 70A, 70B as illustrated schematically in Figure 2, but this may not prove practical for mass production. What is necessary, however, is for substantial inversion of the lubricant feed and return passages 62A, 62B, 64A, 64B to take operative effect at the turbocharger mounting faces 72A, 72B. For example, in the embodiment illustrated the lubricant return passage 64A of the front mounting 46 is inboard of its associated lubricant feed passage 62A. The lubricant return passage 64B of the rear mounting 48 is therefore outboard of its associated lubricant feed passage 62B such that inversion has taken place.

While the inversion has be described in relation to implementation inside the rear mounting 48, the invention is not limited to this embodiment. The disposition of the lubricant feed and return passages 62A, 62B, 64A, 64B will usually depend on the disposition of the lubricant inlets 74 and outlets 76 of the turbochargers 22A, 22B, whose disposition on the mountings 46, 48 will depend in turn on which direction about the engine 10 the turbochargers 22A, 22B need to face and the positioning of their mounting holes 60.

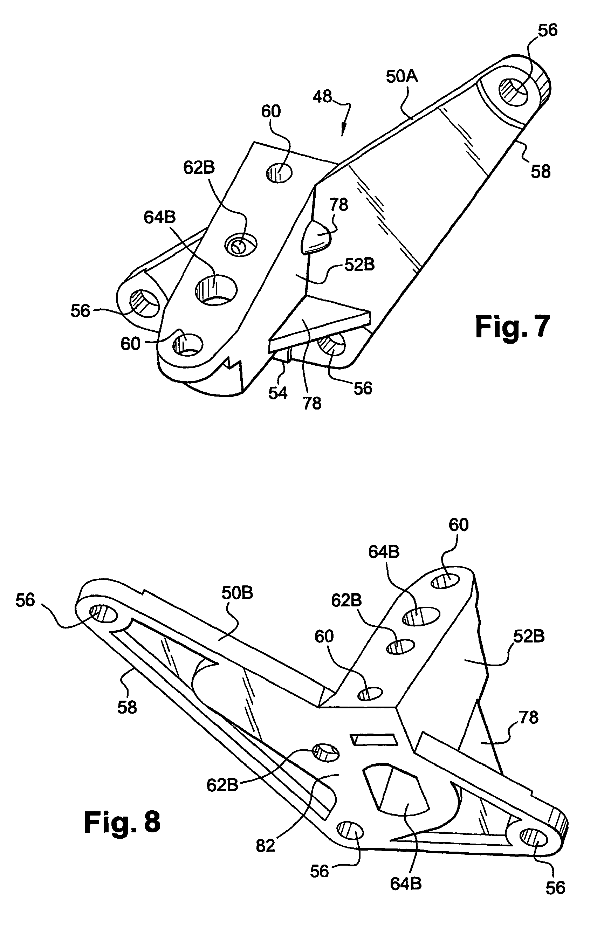

To achieve the inversion through practical mountings 46, 48, it may be found easier to implement an off-set relationship between the lubricant feed and return passages 62B, 64B at their interface with the cylinder crankcase 12. An example may be seen with particular reference to the views of Figures 6 and 8. In the rear face 80 (i.e. crankcase interface side) of the front mounting 46, the lubricant feed and return passages 62A, 64A are side-by-side with the mounting 46 in its in-use position. In the rear face 82 of the rear mounting 46, the lubricant feed passage 62B is offset upwards from the lubricant return passage 64B. This arrangement may ease manufacture of the mounting 48 that includes the internal crossover between the lubricant feed and return passages 62B, 64B, e.g. by keeping down the number of drilling operations used. For either mounting 46, 48, so as to reach its destination on the turbocharger mounting face 72A, 72B, the lubricant feed passage 62A, 62B may pass through one or more portions of their associated mounting 46, 48 that also acts as a fillet 78.

The inversion will now be considered for the moment with particular reference to the schematic diagram of Figure 1. Symmetry across opposing sides of the cylinder crankcase 12 is preferably maintained for the lubricant supply passages 68A, 68b and return passages 70A, 70B, inversion 66 being effected through one of the mountings 48 so that feed and return passages 62A, 62B, 64A, 64B at the interface 72A, 72B, 60 between the mountings 46, 48 and the turbochargers 22A, 22B are functionally swapped over between sides of the engine 10 in accordance with the inversion arrows 66A. The arrangement therefore facilitates a method of mounting a pair of substantially identical turbochargers 22A, 22B to opposite sides of an engine 10 in mirror orientation, e.g. so that an axis through equal parts of each of those turbochargers 22A, 22B is disposed at substantially the same orientation as each other about the rest of the engine 10.

Referring for the moment in particular to Figures 2 to 4, it can be seen that use of identical turbochargers 22A, 22B in substantially mirror image orientations about the engine 10 may offset certain parts of the turbochargers 22A, 22B towards or away from the engine. For example, in Figures 2 to 4 it can be seen that the exhaust gas entry 30 of the front bank turbocharger 22A is offset away from the engine 10, whereas the exhaust gas entry 30 of the rear bank turbocharger 22B is offset towards the engine 10. This situation may effect the design of the exhaust arrangement 44 supplying the turbochargers 22A, 22B, e.g. with respect to primary tract length or routing.

In addition, packaging concerns may make it necessary to position one of the turbochargers 22A at a different spacing from the cylinder crankcase 12 than the other 22B. Such a situation is illustrated by way of example and the front bank turbocharger 22A is spaced away from the cylinder crankcase 12 by more than the rear bank turbocharger 22B. Although the spacing away from the cylinder crankcase 12 is different, the turbochargers 22A, 22B are still orientated in substantially mirror fashion about the engine 10, with both their charge air entries 34 and exhaust gas exits 32 oriented in substantially the same way, e.g. with respect to a centreline C/L running through the cylinder crankcase 12 the turbine shaft 38 of each turbocharger 22A, 22B runs substantially parallel to that centreline C/L with corresponding parts 32, 34 pointing in the same direction front F or rear R of the engine 10.

The spacing, alignment and inclination of the turbochargers 22A, 22B with respect to the cylinder crankcase 12 is defined by the dimensions, angles and turbocharger fixing points 60 of the arms 52A, 52B. By way of example, the arm 52A of the front mounting 46 extends further out from its back plate 50A than does the arm 52B of the rear mounting 48 from its back plate 50B. This positions the front bank turbocharger 22A further away from the cylinder crankcase 12 than is positioned the rear bank turbocharger 22B by its mounting 48. The dimensions of fillets 78 and/or other strengthening features may vary between mountings 46, 48, e.g. in dependence on their individual packaging or load requirements.

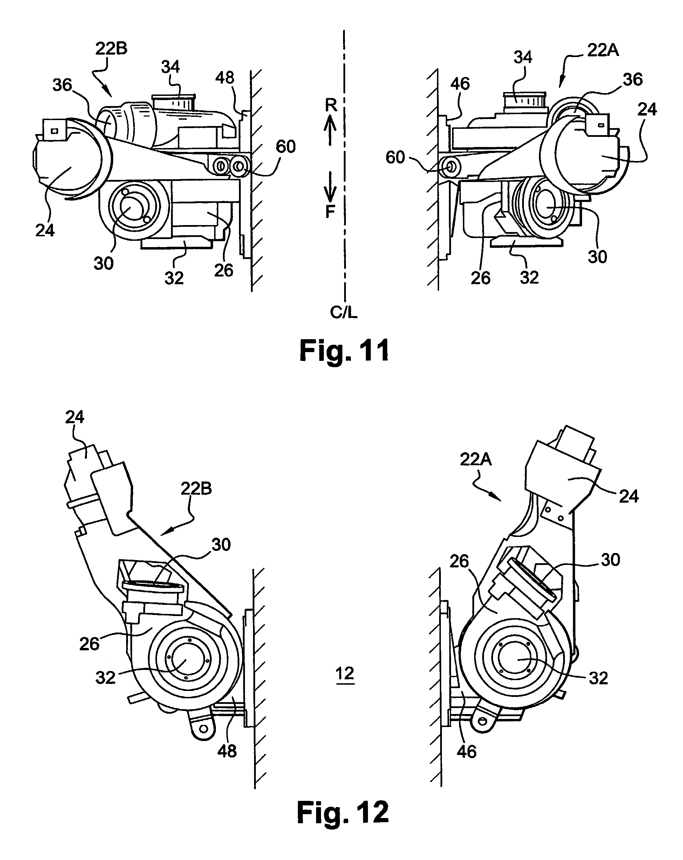

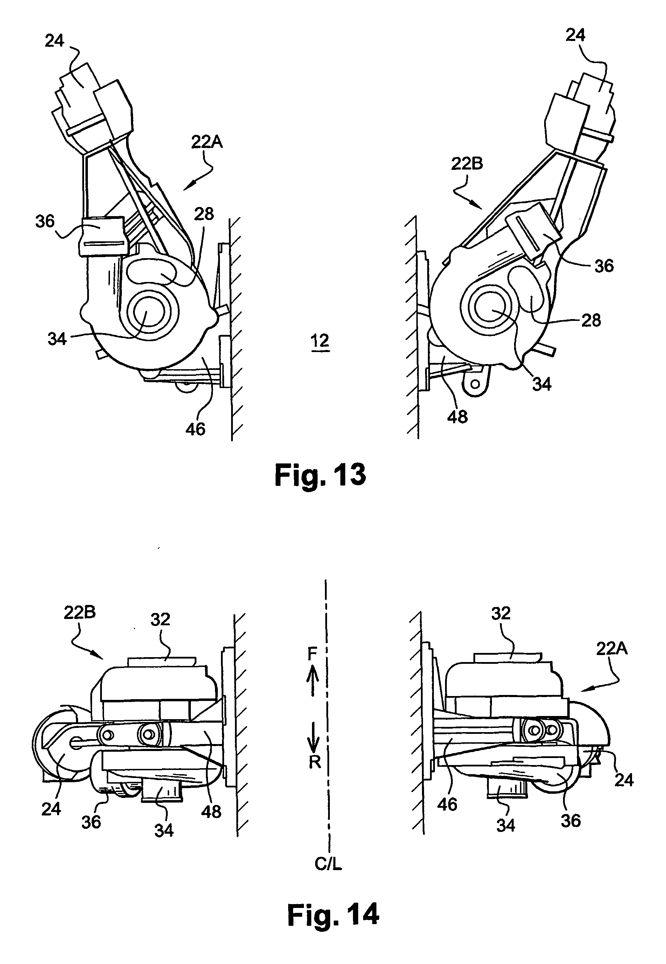

Referring for the moment in particular to Figures 12 and 13, it can be seen that in the illustrated embodiment the corresponding charge air exits 36 and exhaust gas entries 30 do not necessarily line up with each other. This may be the case even though their corresponding charge air entries 34 and exhaust gas exits 32 are in substantially even orientation with respect to the cylinder crankcase 12. Whether or not more than one pair or set of corresponding orifices 30, 32, 34, 36 between the turbochargers 22A, 22B will be aligned once they are in a practical installation, may depend on the particular model of turbocharger used.

Among the advantages of the invention is the provision of a low cost arrangement for using a plurality of substantially identical turbo chargers on the same engine while achieving substantially mirror image orientations of those units around the engine. This saves costs by raising the volumes of the expensive part of a turbo-charging arrangement, the turbocharger itself, rather than necessitating several different and possibly custom units. The piece price of individual custom mountings being, of course, much lower than that of custom turbochargers. Furthermore, the arrangement may provide greater supplier choice as standard or off-the-shelf units may be employed. The arrangement also helps achieve optimum packaging and design for inlet and exhaust systems by aligning two or more entries or exits of the turbochargers in substantially the same direction. Changes in design between variants of an engine family or installation may also be accommodated by design changes to only the separate mountings, whose tooling and development costs are not high.

The mounting being separate can be mounted with greater flexibility than in installations that propose a one-piece mounting for twin superchargers, e.g. lower down which save height in under-hood. This is particularly advantageous where the engine assembly concerned is to be used in a passenger vehicle, sports utility vehicle (SUV) or light commercial vehicle, e.g. where hood height is an important design constraint.

## Claims

1. A supercharger arrangement for an engine assembly, the arrangement including first and second superchargers (22A, 22B) that are mounted on said engine assembly (10) via first and second supercharger mounting means (46, 48) respectively, said superchargers being separable from said mounting means and said mounting means defining therethrough a supercharger lubrication conduit (62A, 62B) for each said supercharger, **characterised in that** said supercharger mounting means comprises individual, separable first and second supercharger mounting members (46, 48) and **in that** said lubrication conduits (62A, 62B) are routed through their respective said mounting members in such a manner that said first and second superchargers (22A, 22B) are mounted on said engine assembly (10) pointing in substantially the same direction, preferably in substantially mirror image orientation thereabouts.

2. An arrangement according to claim 1, wherein said mounting members (46, 48) are disposed on opposite sides of a crankcase (12) of said engine assembly (10).

3. An arrangement according to claim 2, wherein said lubrication conduits (62A, 62B) connect said superchargers (22A, 22B) to an engine lubrication circuit through the sides of said crankcase (12).

4. An arrangement according to any preceding claim, wherein said lubrication conduits each comprise a lubricant feed passage (62A, 62B) and a lubricant return passage (64A, 64B) and the routing of at least part of said feed and return passages is inverted between said mounting members (46, 48).

5. An arrangement according to claim 4, wherein inversion of said feed (62A, 62B) and return (64A, 64B) passages takes operative effect at respective supercharger mounting faces (72A, 72B) of said first and second supercharger mounting members (46, 48).

6. An arrangement according to any preceding claim, wherein, when said superchargers (22A, 22B) are mounted on said engine assembly (10), at least one of corresponding pairs of charge air entries (34), charge air exits (36), exhaust gas entries (30) or exhaust gas exits (32) of said superchargers are disposed in substantially the same orientation as each other with respect to said engine assembly.

7. An arrangement according to any preceding claim, wherein at least one said individual mounting member (46, 48) comprises a component that is integrated with a crankcase (12) of said engine assembly 10).

8. An arrangement according to any preceding claim, wherein at least one said mounting member (46, 48) comprises a casting or a moulding.

9. An arrangement according to any preceding claim, wherein at least one said individual mounting member (46, 48) comprises a component that is separable from both its associated said supercharger (22A, 22B) and from the rest of said engine assembly (10).

10. An arrangement according to any preceding claim, wherein mounting of said superchargers (22A, 22B) is interchangeable between said first and second mounting members (46, 48), said superchargers preferably being of substantially identical construction.

11. An arrangement according to any preceding claim, comprising a supercharger arrangement for an engine (10) of a passenger vehicle, sports utility vehicle or light commercial vehicle.

12. An arrangement according to any preceding claim, wherein said engine assembly (10) comprises a multi-bank engine (V-engine) having a crankcase (12) and defining a plurality of cylinders that are disposed in banks (14, 16) at an angle with respect to each other, said individual first and second mounting members (46, 48) being disposed on opposite sides of said crankcase and said first and second superchargers (22A, 22B) being associated with different said banks of said engine assembly.

13. A method of mounting a plurality of superchargers (22A, 22B) on an engine assembly (10), the method including;
a) providing on substantially opposing sides of said engine assembly individual first and second supercharger mounting members (46, 48), each of which mounting members has defined therethrough a lubrication feed passage (62A, 62B) and a lubrication return passage (64A, 64B) whose routing is substantially inverted between said mounting members in the region of respective supercharger mounting faces (72A, 72B) thereof; and
b) connecting first and second superchargers, preferably of substantially identical construction, to said first and second mountings respectively pointing in substantially the same orientations about said engine, preferably in substantially mirror image orientations thereabouts.

## Patentansprüche

1. Aufladegebläseanordnung für eine Verbrennungsmotoreinheit, wobei die Anordnung erste und zweite Aufladegebläse (22A, 22B) beinhaltet, die über erste bzw. zweite Aufladegebläsemontagemittel (46, 48) an der Verbrennungsmotoreinheit (10) montiert sind, wobei die Aufladegebläse von den Montagemitteln getrennt werden können und die Montagemittel eine dadurch verlaufende Aufladegebläseschmierleitung (62A, 62B) für jedes Aufladegebläse definieren, **dadurch gekennzeichnet, dass** das Aufladegebläsemontagemittel individuelle, trennbare erste und zweite Aufladegebläsemontageelemente (46, 48) umfasst und dass die Schmierleitungen (62A, 62B) in einer solchen Weise durch ihre jeweiligen Montageelemente verlaufen, dass die ersten und zweiten Aufladegebläse (22A, 22B) so an der Verbrennungsmotoreinheit (10) montiert sind, dass sie im Wesentlichen in der gleichen Richtung, vorzugsweise in im Wesentlichen spiegelbildlicher Orientierung, daran ausgerichtet sind.

2. Anordnung nach Anspruch 1, bei der sich die Montageelemente (46, 48) an gegenüberliegenden Seiten eines Kurbelgehäuses (12) der Verbrennungsmotoreinheit (10) befinden.

3. Anordnung nach Anspruch 2, bei der die Schmierleitungen (62A, 62B) die Aufladegebläse (22A, 22B) durch die Seiten des Kurbelgehäuses (12) mit einem Verbrennungsmotorschmierkreislauf verbinden.

4. Anordnung nach einem der vorstehend aufgeführten Ansprüche, bei der die Schmierleitungen jeweils einen Schmiermittelzuführungsdurchgang (62A, 62B) und einen Schmiermittelrückführungsdurchgang (64A, 64B) umfassen und mindestens ein Teil der Zuführungs- und Rückführungsdurchgänge zwischen den Montageelementen (46, 48) umgekehrt verlaufen.

5. Anordnung nach Anspruch 4, bei der sich die Umkehrung der Zuführungsdurchgänge (62A, 62B) und Rückführungsdurchgänge (64A, 64B) betriebswirksam an jeweiligen Aufladegebläsemontageflächen (72A, 72B) der ersten und zweiten Aufladegebläsemontageelemente (46, 48) auswirkt.

6. Anordnung nach einem der vorstehend aufgeführten Ansprüche, bei der, wenn die Aufladegebläse (22A, 22B) an der Verbrennungsmotoreinheit (10) montiert sind, mindestens ein Paar entsprechender Paare von Ladelufteingängen (34), Ladeluftausgängen (36), Abgaseingängen (30) oder Abgasausgängen (32) der Aufladegebläse im Verhältnis zur Verbrennungsmotoreinheit im Wesentlichen die gleiche Orientierung wie jedes andere aufweist.

7. Anordnung nach einem der vorstehend aufgeführten Ansprüche, bei der mindestens ein individuelles Montageelement (46, 48) ein Bauteil umfasst, das integral mit einem Kurbelgehäuse (12) der Verbrennungsmotoreinheit (10) ausgeführt ist.

8. Anordnung nach einem der vorstehend aufgeführten Ansprüche, bei der mindestens eines der Montageelemente (46, 48) ein Gussteil oder ein Formteil umfasst.

9. Anordnung nach einem der vorstehend aufgeführten Ansprüche, bei der mindestens eines der individuellen Montageelemente (46, 48) ein Bauteil umfasst, das sich sowohl von seinem zugehörigen Aufladegebläse (22A, 22B) als auch vom Rest der Verbrennungsmotoreinheit (10) trennen lässt.

10. Anordnung nach einem der vorstehend aufgeführten Ansprüche, bei der für das Montieren der Aufladegebläse (22A, 22B) die ersten und zweiten Montageelemente (46, 48) austauschbar verwendet werden können, wobei die Aufladegebläse vorzugsweise im Wesentlichen identisch ausgeführt sind.

11. Anordnung nach einem der vorstehend aufgeführten Ansprüche, die eine Aufladegebläseanordnung für einen Verbrennungsmotor (10) eines Personenkraftwagens, Geländewagens oder Leichtnutzfahrzeugs umfasst.

12. Anordnung nach einem der vorstehend aufgeführten Ansprüche, bei der die Verbrennungsmotoreinheit (10) einen mehrreihigen (V-förmigen) Verbrennungsmotor mit einem Kurbelgehäuse (12) umfasst, der mehrere Zylinder definiert, die in Reihen (14, 16) in einem Winkel zueinander angeordnet sind, wobei sich die individuellen ersten und zweiten Montageelemente (46, 48) auf gegenüberliegenden Seiten des Kurbelgehäuses befinden und die ersten und zweiten Aufladegebläse (22A, 22B) unterschiedlichen Reihen der Verbrennungsmotoreinheit zugeordnet sind.

13. Verfahren zum Montieren mehrerer Aufladegebläse (22A, 22B) an einer Verbrennungsmotoreinheit (10), wobei das Verfahren Folgendes beinhaltet:
a) Bereitstellen individueller erster und zweiter Aufladegebläsemontageelemente (46, 48) an im Wesentlichen gegenüberliegenden Seiten der Verbrennungsmotoreinheit, wobei jedes der Montageelemente einen dadurch verlaufenden Schmiermittelzuführungsdurchgang (62A, 62B) und einen Schmiermittelrückführungsdurchgang (64A, 64B) definiert, deren Verlauf zwischen den Montageelementen im Bereich jeweiliger Aufladegebläsemontageflächen (72A, 72B) davon im Wesentlichen umgekehrt vorgesehen ist; und
b) Verbinden der ersten und zweiten Aufladegebläse, die vorzugsweise im Wesentlichen identisch ausgeführt sind, mit den ersten bzw. zweiten Montagemitteln, wobei die Ausrichtung der Gebläse am Verbrennungsmotor im Wesentlichen in den gleichen Orientierungen, vorzugsweise im Wesentlichen in spiegelbildlichen Orientierungen, daran erfolgt.

## Revendications

1. Agencement de turbocompresseurs pour un ensemble moteur, l'agencement comportant des premier et deuxième turbocompresseurs (22A, 22B) qui sont montés sur ledit ensemble moteur (10) par le biais de premier et deuxième moyens de montage de turbocompresseurs (46, 48), respectivement, lesdits turbocompresseurs pouvant être séparés desdits moyens de montage et lesdits moyens de montage définissant à travers eux un conduit de lubrification des turbocompresseurs (62A, 62B), pour chacun desdits turbocompresseurs, **caractérisé en ce que** ledit moyen de montage de turbocompresseur comprend des premier et deuxième organes de montage séparables de turbocompresseur individuels (46, 48) et **en ce que** lesdits conduits de lubrification (62A, 62B) sont acheminés à travers leurs dits organes de montage respectifs de manière telle que lesdits premier et deuxième turbocompresseurs (22A, 22B) soient montés sur ledit ensemble moteur (10) de manière à être tournés dans substantiellement la même direction, de préférence dans substantiellement une orientation spéculaire autour de celui-ci.

2. Agencement selon la revendication 1, dans lequel lesdits organes de montage (46, 48) sont disposés sur des côtés opposés d'un carter-moteur (12) dudit ensemble moteur (10).

3. Agencement selon la revendication 2, dans lequel lesdits conduits de lubrification (62A, 62B) relient lesdits turbocompresseurs (22A, 22B) à un circuit de lubrification de moteur à travers les côtés dudit carter-moteur (12).

4. Agencement selon l'une quelconque des revendications précédentes, dans lequel lesdits conduits de lubrification comprennent chacun un passage d'alimentation en lubrifiant (62A, 62B) et un passage de retour de lubrifiant (64A, 64B) et l'acheminement d'au moins une partie desdits passages d'alimentation et de retour est inversé entre lesdits organes de montage (46, 48).

5. Agencement selon la revendication 4, dans lequel l'inversion desdits passages d'alimentation (62A, 62B) et de retour (64A, 64B) a lieu fonctionnellement sur des surfaces de montage respectives (72A, 72B) de turbocompresseurs desdits premier et deuxième organes de montage de turbocompresseurs (46, 48).

6. Agencement selon l'une quelconque des revendications précédentes, dans lequel, lorsque lesdits turbocompresseurs (22A, 22B) sont montés sur ledit ensemble moteur (10), au moins l'une de paires correspondantes d'entrées d'air de suralimentation (34), de sorties d'air de suralimentation (36), d'entrées de gaz d'échappement (30) ou de sorties de gaz d'échappement (32) desdits turbocompresseurs sont disposées dans substantiellement la même orientation les unes par rapport aux autres par rapport audit ensemble moteur.

7. Agencement selon l'une quelconque des revendications précédentes, dans lequel au moins l'un desdits organes de montage individuels (46, 48) comprend un composant qui est intégré à un carter-moteur (12) dudit ensemble moteur (10).

8. Agencement selon l'une quelconque des revendications précédentes, dans lequel au moins l'un desdits organes de montage (46, 48) comprend un coulage ou un moulage.

9. Agencement selon l'une quelconque des revendications précédentes, dans lequel au moins l'un desdits organes de montage individuels (46, 48) comprend un composant qui est séparable à la fois de son turbocompresseur associé (22A, 22B) et du reste dudit ensemble moteur (10).

10. Agencement selon l'une quelconque des revendications précédentes, dans lequel le montage desdits turbocompresseurs (22A, 22B) est interchangeable entre lesdits premier et deuxième organes de montage (46, 48), lesdits turbocompresseurs étant de préférence de construction substantiellement identique.

11. Agencement selon l'une quelconque des revendications précédentes, comprenant un agencement de turbocompresseur pour un moteur (10) d'un véhicule de passagers, d'un véhicule utilitaire de sport ou d'un véhicule commercial léger.

12. Agencement selon l'une quelconque des revendications précédentes, dans lequel ledit ensemble moteur (10) comprend un moteur à plusieurs rangées (moteur en V) ayant un carter-moteur (12) et définissant une pluralité de cylindres qui sont disposés en rangées (14, 16) suivant un certain angle l'une par rapport à l'autre, lesdits premier et deuxième organes de montage individuels (46, 48) étant disposés sur des côtés opposés dudit carter-moteur et lesdits premier et deuxième turbocompresseurs (22A, 22B) étant associés à différentes desdites rangées dudit ensemble moteur.

13. Procédé de montage d'une pluralité de turbocompresseurs (22A, 22B), sur un ensemble moteur (10), le procédé comprenant les étapes consistant à :
a) fournir sur des côtés substantiellement opposés dudit ensemble moteur des premier et deuxième organes de montage individuels de turbocompresseurs (46, 48), chacun desdits organes de montage ayant un passage d'alimentation en lubrifiant (62A, 62B) et un passage de retour de lubrifiant (64A, 64B) définis à travers lui, dont l'acheminement est substantiellement inversé entre lesdits organes de montage dans la région de faces de montage respectives de turbocompresseurs (72A, 72B) de ceux-ci ; et
b) connecter des premier et deuxième turbocompresseurs, de préférence de construction substantiellement identique, auxdits premier et deuxième montages, respectivement orientés dans substantiellement les même orientations autour dudit moteur, de préférence dans des orientations substantiellement spéculaires autour de celui-ci.
